# EUROPÄISCHE PATENTSCHRIFT

(11) **EP 1 880 590 B1**
(45) Veröffentlichungstag und Bekanntmachung des Hinweises auf die Patenterteilung: **23.09.2009**
(21) Anmeldenummer: 07013171.9
(22) Anmeldetag: 05.07.2007
(51) Int. Cl.: A01B 61/04

(54) **Vorrichtung einer Landmaschine**
Device of an agricultural machine
Dispositif d'une machine agricole

(30) Priorität: 18.07.2006 DE 102006033119
(43) Veröffentlichungstag der Anmeldung: 23.01.2008
(73) Patentinhaber: Amazonen-Werke H. Dreyer GmbH & Co. KG, 49205 Hasbergen (DE)
(72) Erfinder: Goretzko, Robert, 28201 Bremen (DE); Steen, Rüdiger, 27798 Hude (DE)

(56) Entgegenhaltungen:
- EP-A- 1 541 003
- DE-A1- 4 202 771
- FR-A- 2 842 699

## Beschreibung

Die Erfindung betrifft eine Aufhängungsvorrichtung einer Landmaschine gemäß des Oberbegriffes des Patentanspruches 1.

Eine derartige Aufhängungsvorrichtung ist beispielsweise durch die FR-A-2 842 699, DE 103 43 466 A1 und DE 2004 007 112 U1 bekannt geworden. Die elastischen Lagerelemente, die zwischen dem Schwenkarmträger und dem diesen umgreifenden Lagerkörper angeordnet sind, haben teilweise das Bestreben aus der Lagerung heraus zu wandern. Diesem hat man im Stand der Technik dadurch abzuhelfen versucht, dass Anschläge oder Halteflansche entweder an dem Schwenkarmträger oder an den Lagerkörpern angeordnet sind. Derartig zusätzliche Teile erhöhen jedoch den Montageaufwand und die Fertigungskosten.

Der Erfindung liegt die Aufgabe zugrunde, in einfacher Weise zu erreichen, dass die elastischen Lagerkörper nicht aus der Lagerung heraus wandern.

Diese Aufgabe wird erfindungsgemäß dadurch gelöst, dass das elastische Lagerelement gegenüber den beiden seitlichen Endbereichen eingeschnürt ausgebildet ist. Infolge dieser Maßnahme wird einerseits eine automatische Zentrierung des elastischen Lagerelementes während des Einsatzes der Landmaschine erreicht. Durch die zumindest annähernd mittige Einschnürung hat das Lagerelement das Bestreben immer in der Lagerung zu bleiben. Weiterhin wird durch die Einschnürung erreicht, dass das elastische Lagerelement im mittleren Bereich einen kleineren Durchmesser als in dem äußeren Bereich aufweist. Hierdurch ist die Federkraft im seitlichen Bereich der Lagerung bzw. des Lagerkörpers größer als im mittleren Bereich, in welchem das elastische Lagerelement dünner ausgeformt ist. Dies wirkt sich auf eine vorteilhafte stabilere Seitenführung des Schwenkarmes aus, der bei seitlich auftreffenden Kräften, insbesondere wenn an dem dem Lagerkörper abgewandten Ende des Schwenkarmes eine schräg zur Fahrtrichtung angestellte Scheibe drehbar gelagert ist.

Eine einfache Ausgestaltung zur Erreichung eines eingeschnürten elastischen Lagerelementes wird dadurch erreicht, dass die äußeren Endbereiche des Lagerelementes zumindest teilweise kegelstumpfförmig ausgebildet sind.

Hierbei kann das elastische Lagerelement im wesentlichen aus zwei kegelstumpfförmigen aneinander anschließenden Teilbereichen bestehen. In einer anderen Ausgestaltung ist vorgesehen, dass zwischen den beiden kegelstumpfförmigen Bereichen des Lagerelementes sich ein zylinderförmiger Bereich befindet. Auch ist es möglich, dass zusätzlich an den Endbereichen des elastischen Lagerelementes sich zylinderförmige Enden des Lagerelementes anschließen.

Es wird weiterhin Schutz für ein elastisches Lagerelement zur Anordnung in einer vorbeschriebenen Aufhängungsvorrichtung nach den Ansprüchen 1-6 beansprucht.

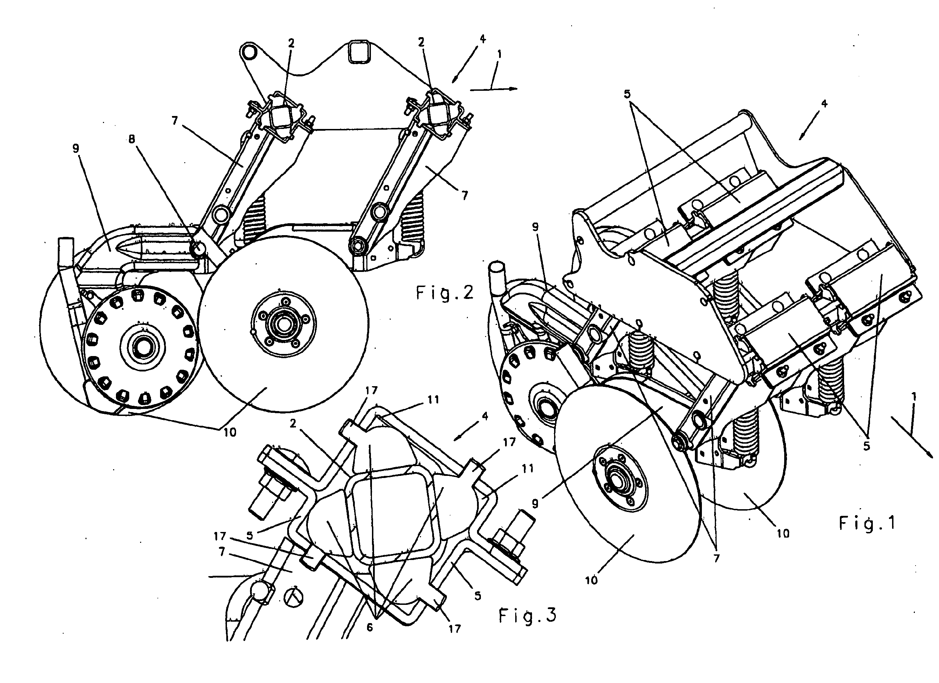

Weitere Einzelheiten der Erfindung sind der Beispielsbeschreibung und den Zeichnungen zu entnehmen. Hierbei zeigen
- Fig. 1: die Anordnung der Schwenkarmträger mit den Schwenkarmen und den Lagerkörpern einer Säeinheit einer als Sämaschine ausgebildeten Landmaschine in perspektivischer Darstellung,
- Fig. 2: die Anordnung der Aufhängungsvorrichtung der Säeinheit in Seitenansicht,
- Fig. 3: die Lagerung der Schwenkarme mit Lagerelementen an dem Schwenkarmträger der Anhängungsvorrichtung in Seitenansicht und vergrößertem Maßstab,
- Fig. 4: die an dem Lagerkörper der Aufhängungsvorrichtung angeordneten elastischen Lagerelemente,
- Fig. 5: ein elastisches Lagerelement in perspektivischer Darstellung und
- Fig. 6: ein elastisches Lagerelement in Vorderansicht und vergrößerten Maßstab,
- Fig. 7: die an einen Schwenkarmträger mittels der Aufhängungsvorrichtungen angeordneten als Scheiben ausgebildeten Bodenbearbeitungswerkzeuge einer Scheibenegge in perspektivischer Darstellung und
- Fig. 8: die Aufhängungsvorrichtung für die Bodenbearbeitungswerkzeuge, an einem Schwenkarmträger angeordnet in Seitenansicht und vergrößertem Maßstab.

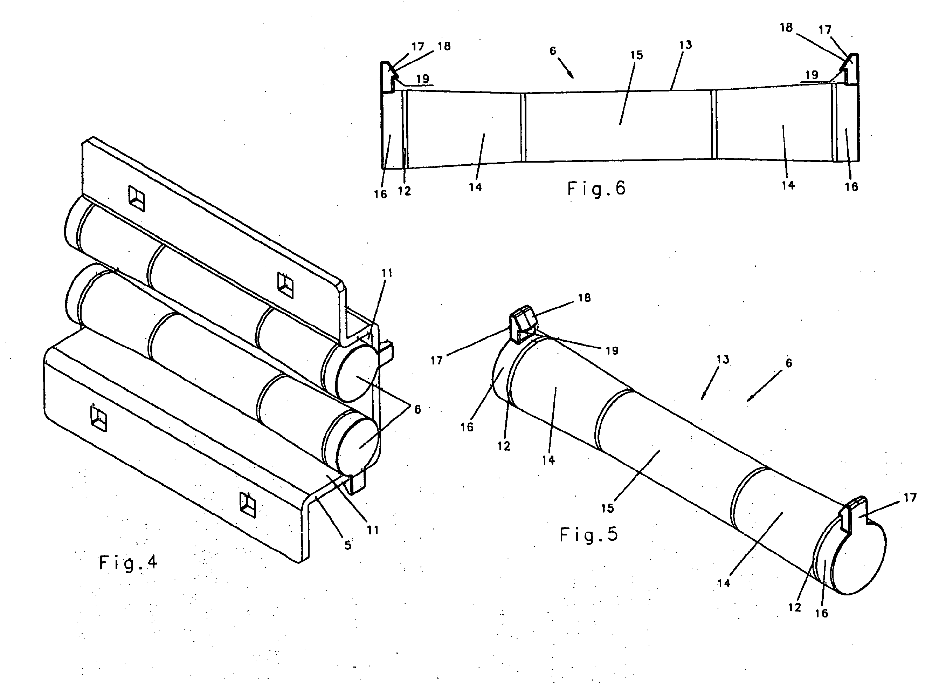

An einem nicht dargestellten Rahmen einer Landmaschine, die als Sämaschine ausgebildet ist, sind die quer zur Fahrtrichtung 1 verlaufenden Schwenkarmträger 2 einer Säeinheit 3 beabstandet zueinander angeordnet. An dem Rahmen der Sämaschine sind mehrere Säeinheiten 3 nebeneinander, entsprechend der jeweils vorgesehenen Arbeitsbreite der Sämaschine, angeordnet. Mittels einer Aufhängungsvorrichtung 4 sind an den Schwenkarmträgern 2 jeweils über den Lagerkörper 5, den elastischen Lagerelementen 6 die Schwenkarme 7, welche an den dem Lagerkörper 5 abgewandten Ende 8 mittels eines Zwischenarmes 9 und eines Drehlagers jeweils eine drehbar und schräg zur Fahrtrichtung 1 angestellte als Scharscheibe ausgebildete Bodenbearbeitungsscheibe 10 aufweisen, angeordnet. Der Schwenkarm 7 ist über den Lagerkörper 5 und den elastischen Lagerelementen 6 um eine in Längsrichtung des Schwenkarmträgers 2 verlaufende Schwenkachse schwenkbar. Die Schwenkbewegung des Schwenkarmes 7 wird durch eine elastische Verformung der elastischen Lagerelemente 6, deren Längsachse ebenfalls in Längsrichtung des Schwenkarmträgers 2 verlaufen, ermöglicht. Außerdem kann der Schwenkarm 7 mit dem Bodenbearbeitungselement 10 im begrenzten Umfang durch ebenfalls elastische Verformung der elastischen Lagerelemente 6 seitlich ausweichen. Die Lagerkörper 5, welchen den Schwenkarmträger 2 umgreifen, weisen einen vierkantförmigen Querschnitt auf. Ebenfalls weist der Schwenkarmträger 2 einen vierkantförmigen Querschnitt auf, wobei der Lagerkörper 5 gegenüber dem Profil des Schwenkarmträgers 2 in der Ausgangsstellung um 45° verdreht ist, so dass sich der Zwischenraum zwischen dem Lagerkörper 5 und dem davon umgriffenen Schwenkarmträger 2 in vier Lagerelementekammern 11 untergliedert. In diesen vier Lagerelementekammern 11 ist jeweils ein elastisches Lagerelement 6 angeordnet. Das elastische Lagerelement 6 ist gegenüber den beiden seitlichen Endbereichen 12 im mittleren Bereich 13 eingeschnürt ausgebildet, wie die Fig. 4 und 5 zeigen. Somit weist das elastische Lagerelement 6 im mittleren Bereich 13 einen kleineren Durchmesser als im äußeren Bereich auf. Das elastische Lagerelement 6 besteht aus zwei aufeinander zulaufenden kegelstumpfförmigen Bereichen 14, wobei sich zwischen diesen beiden kegelstumpfförmigen Bereichen 14 ein zylinderförmiger Bereich 15 befindet, der in etwa einen Durchmesser aufweist, der den kleinsten Durchmesser des kegelstumpfförmigen Bereiches 14 entspricht. An den Endbereichen der kegelstumpfförmigen Bereiche 14 des elastischen Lagerelementes 6 schließen sich außen zylinderförmige Enden 16 des Lagerelementes 6 an, welche in etwa den Durchmesser des größten Bereiches des zylinderstumpfförmigen Bereiches 14 des Lagerelementes 6 aufweisen.

Zur Vereinfachung der Montage sind an den Endbereichen 16 gegenüberliegend an dem elastischen Lagerelement 6 jeweils ein Verbindungselement 17 angeordnet. Das jeweilige Verbindungselement 17 ist hakenförmig oder clipsartig ausgebildet. Somit sind jeweils an den beiden gegenüberliegenden Enden 16 des elastischen Lagerelementes 6 die beiden Verbindungselemente 17 angeordnet. Die Verbindungselemente 17 sind mit dem elastischen Lagerelement 6 einstückig verbunden. Jedes Verbindungselement 17 weist auf der dem Lagerkörper 5 zugewandten Seite eine nach außen verlaufende Schräge 18 auf. Mittels der Verbindungselemente 17 sind die elastischen Lagerelemente 6 mit dem Lagerkörper 5 verbindbar bzw. an ihn anclipsbar. Zur Erleichterung des Aufclipsens an dem Lagerkörper 5 dient die nach außen verlaufende Schräge 18 der Verbindungselemente 17. Hierdurch wird eine erhebliche Montageerleichterung erreicht, da die Verbindungselemente 17 formschlüssig mittels des clipsartigen Hakens 19 an dem Lagerkörper 5 vor der Montage des Lagerkörpers 5 mit den elastischen Lagerelementen 6 an den Schwenkarmträger 2 befestigt werden können.

Anstelle einer beschriebenen formschlüssigen Verbindung ist es auch möglich, die Verbindungselemente 17 so auszugestalten, dass sie über Reibschluss das elastische Lagerelement 6 am Lagerkörper 5 halten.

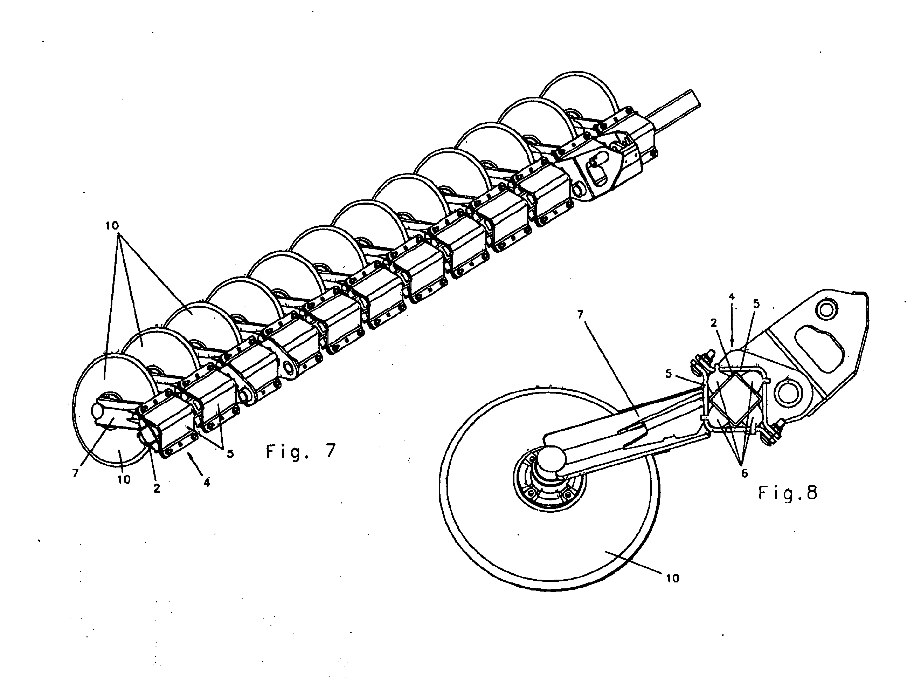

Die Aufhängungsvorrichtung 4 mit den Schwenkarmträgern 2 und den Lagerkörpern 5, sowie den elastischen Lagerelementen 6 und den Schwenkarmen 7 kann auch bei einer gemäß den Fig. 7 und 8 dargestellten Kurzscheibenegge, an der nur der eine als Scharbalken ausgebildeten Schwenkarmträger 2 der Kurzscheibenegge in Fig. 7 und 8 dargestellt sind, angewendet werden. An dem Schwenkarmträger, der an einem nicht dargestellten Rahmen mittels geeigneter Halterung angeordnet ist, sind mittels der Aufhängungsvorrichtung 4 die Schwenkarme 7 über den Lagerkörper 5 und die elastischen Lagerelemente 6 um eine in Längsrichtung des Schwenkarmträgers 2 verlaufende Schwenkachse schwenkbar angeordnet. An dem den Lagerkörpern 5 abgewandten Ende 8 der Schwenkarme 7 sind mittels Drehlager jeweils eine drehbar angeordnete Bodenbearbeitungsscheibe 10 angeordnet. Die elastischen Lagerelemente 6 weisen ebenfalls die vorbeschriebenen Verbindungselemente 17 auf, mittels welchen die elastischen Lagerelemente 6 an dem Lagerkörper 5 zu befestigen sind.

## Patentansprüche

1. Aufhängungsvorrichtung einer Landmaschine zur Aufhängung eines Maschinenteils, insbesondere eines Bodenbearbeitungswerkzeuges (10), mit zumindest einem das Maschinenteil tragenden schwenkarm (7) sowie einem sich vorzugsweise quer zur Arbeitsrichtung (1) erstreckenden Schwenkarmträger (2), an dem der Schwenkarm (7) mit einem Lagerkörper (5) schwenkbar gelagert ist, wobei der Lagerkörper (5) den Schwenkarmträger (2) umgreift und zwischen dem Lagerkörper (5) und den davon umgriffenen Abschnitt des schwenkarträgers (2) zumindest ein elastisches Lagerelement (6) vorgesehen ist, das sich mit seiner Längsachse im wesentlichen parallel zu der Schwenkachse des schwenkarmes (7) und der Längsachse der schwenkarmträger (2) erstreckt und durch Schwenkbewegungen des schwenkarmes (7) eine zumindest teilweise Verformung erfährt, **dadurch gekennzeichnet, dass** das elastische Lagerelement (6) gegenüber den beiden seitlichen Endbereichen (12) eingeschnürt ausgebildet ist.

2. Aufhängungsvorrichtung nach Anspruch 1, **dadurch gekennzeichnet, dass** das elastische Lagerelement (6) im mittleren Bereich (13) einen kleineren Durchmesseer als im äußeren Bereich (12) aufweist.

3. Aufhängungsvorrichtung nach einem oder mehreren der vorstehenden Ansprüche, **dadurch gekennzeichnet, dass** die äußeren Endbereiche (14) des Lagerelementes (6) zumindest teilweise kegelstumpfförmig ausgebildet sind.

4. Aufhängungsvorrichtung nach einem oder mehrere der vorstehenden Ansprüche, **dadurch gekennzeichnet, dass** das elastische Lagerelement (6) im wesentlichen aus zwei kegelstumpfförmigen aneinander anschließenden Teilbereichen. (14) besteht.

5. Aufhängungsvorrichtung nach Anspruch 3, **dadurch gekennzeichnet, dass** zwischen beiden kegelstumpfförmigen Bereichen (14) des Lagerelementes (6) sich ein zylinderförmiger Bereich (15) befindet.

6. Aufhängungsvorrichtung nach Anspruch 3, **dadurch gekennzeichnet, dass** sich an den Endbereichen (12) der kegelstumpfförmigen Bereichen (14) des Lagerelementes (6) zylinderförmige Enden (16) des Lagerelementes (6) anschließen.

7. Elastisches Lagerlelement zur Anordnung in einer Aufhängungsvorrichtung nach einem oder mehreren der vorstehenden Ansprüche 1-6 , **dadurch gekennzeichnet, dass** das elastische Lagerelement (6) gegenüber den beiden seitlichen Endbereichen (12) eingeschnürt ausgebildet ist.

## Claims

1. Suspension device of an agricultural machine for suspending a machine part, in particular a soil cultivation implement (10), comprising at least one pivot arm (7) carrying the machine part, as well as a pivot arm carrier (2) extending preferably transversely to the operating direction (1), on which the pivot arm (7) is pivotably mounted with a bearing body (5), the bearing body (5) encompassing the pivot arm carrier (2), and between the bearing body (5) and the portion of the pivot arm carrier (2) encompassed thereby, at least one resilient bearing element (6) being provided which extends with its longitudinal axis substantially parallel to the pivot axis of the pivot arm (7) and the longitudinal axis of the pivot arm carrier (2), and as a result of pivoting movements of the pivot arm (7) is at least partially deformed, **characterized in that** the resilient bearing element (6) is of constricted configuration relative to the two lateral end regions (12).

2. Suspension device according to Claim 1,
**characterized in that** the resilient bearing element (6) in the central region (13) has a smaller diameter than in the external region (12).

3. Suspension device according to one or more of the preceding claims, **characterized in that** the outer end regions (14) of the bearing element (6) are configured at least partially frustoconically.

4. Suspension device according to one or more of the preceding claims, **characterized in that** the resilient bearing element (6) consists substantially of two frustoconical partial regions (14) adjacent to one another.

5. Suspension device according to Claim 3,
**characterized in that** a cylindrical region (15) is located between the two frustoconical regions (14) of the bearing element (6).

6. Suspension device according to Claim 3,
**characterized in that** the cylindrical ends (16) of the bearing element (6) are adjacent to the end regions (12) of the frustoconical regions (14) of the bearing element (6).

7. Resilient bearing element for arranging in a suspension device according to one or more of the preceding Claims 1 - 6, **characterized in that** the resilient bearing element (6) is of constricted configuration relative to the two lateral end regions (12).

## Revendications

1. Dispositif de suspension de machine agricole pour la suspension d'une partie de la machine notamment d'un outil pour le travail du sol (10), comportant :
- au moins un bras oscillant (7) portant la partie de machine ainsi qu'un support de bras oscillant (2) s'étendant de préférence transversalement à la direction de travail (1), ce support portant de manière pivotante, le bras oscillant (7), par l'intermédiaire d'un corps de palier (5),
- le corps de palier (5) entourant le support de bras oscillant (2), et
- au moins un élément élastique de palier (6) est prévu entre le corps de palier (5) et le segment du support de bras oscillant (2) entouré par le corps,
- cet élément élastique de palier ayant un axe longitudinal pratiquement parallèle à l'axe de pivotement du bras oscillant (7) et à l'axe longitudinal du support de bras oscillant (2), et
- les mouvements de pivotement du bras oscillant (7) lui faisant subir au moins en partie, une déformation,
**caractérisé en ce que**
l'élément élastique de palier (6) est rétréci entre ses deux zones latérales d'extrémité (12).

2. Dispositif de suspension selon la revendication 1,
**caractérisé en ce que**
la zone médiane (13) de l'élément élastique de palier (6) a un diamètre plus petit que la zone d'extrémité (12).

3. Dispositif de suspension selon l'une ou plusieurs des revendications précédentes,
**caractérisé en ce que**
les zones latérales d'extrémité (14) de l'élément de palier (6) sont au moins en partie en forme de tronc de cône.

4. Dispositif de suspension selon l'une ou plusieurs des revendications précédentes,
**caractérisé en ce que**
l'élément élastique de palier (6) se compose principalement de deux zones partielles (14) tronconiques qui se rejoignent.

5. Dispositif de suspension selon la revendication 3,
**caractérisé par**
une zone (15) de forme cylindrique entre les deux zones tronconiques (14) de l'élément de palier (6).

6. Dispositif de suspension selon la revendication 3,
**caractérisé en ce que**
les zones d'extrémité (12) des zones tronconiques (14) de l'élément de palier (6) se poursuivent par des extrémités cylindriques (16) de l'élément de palier (6).

7. Elément élastique de palier pour un dispositif de suspension selon une ou plusieurs des revendications précédentes 1 à 6,
**caractérisé en ce que**
l'élément élastique de palier (6) est rétréci entre ses deux zones latérales d'extrémité (12).
